# EUROPÄISCHE PATENTSCHRIFT

(11) **EP 1 970 235 B1**
(45) Veröffentlichungstag und Bekanntmachung des Hinweises auf die Patenterteilung: **08.01.2014**
(21) Anmeldenummer: 08003883.9
(22) Anmeldetag: 03.03.2008
(51) Int. Cl.: B60J 1/20

(54) **Seitenfensterrollo mit Seilantrieb**
Side window blind with wire drive
Store de fenêtre latérale doté d'un entraînement à corde

(30) Priorität: 14.03.2007 DE 102007012978
(43) Veröffentlichungstag der Anmeldung: 17.09.2008
(73) Patentinhaber: BOS GmbH & Co. KG, 73760 Ostfildern (DE)
(72) Erfinder: Lekar, Jan, 73262 Reichenbach (DE); Hansen, Melf, 75053 Gondelsheim (DE)
(74) Vertreter: Rüger, Barthelt & Abel

(56) Entgegenhaltungen:
- EP-A1- 1 645 448
- EP-A2- 1 123 824
- EP-A2- 1 182 066
- DE-A1-102004 046 783
- DE-U1- 20 112 948
- DE-U1-202004 014 652

## Beschreibung

Bei Seitenfensterrollos von Kraftfahrzeugen geht zur Zeit der Trend dahin, die Führungseinrichtungen zum Führen der Rollobahn möglichst zu verbergen. Damit müssen die bislang verwendeten Führungsschienen, die seitlich des rechteckigen Teils des Fensters verlaufen, durch Führungs- oder Tragstäbe ersetzt werden. Bei ausgefahrenem Rollo tragen die Tragstäbe, wie ihr Name bereits sagt, den Zugstab, der an der freien Kante der Rollobahn angebracht ist. Sie übernehmen damit zwei Funktionen, nämlich den Zugstab so zu führen, dass er an der Scheibe bleibt und andererseits erzeugen sie die notwendige Schubkraft, um die Rollobahn von der Wickelwelle abzuwickeln und gespannt zu halten.

Im eingefahrenen Zustand verschwinden die Tragstäbe innerhalb des Innenraums des Türkorpus und sind unsichtbar.

DE 20 2004 014652 U1 offenbart ein Seitenfensterrollo für Kraftfahrzeuge mit einem Seitenfenster, das eine Fensterunterkante, eine Fensteroberkante, eine unterhalb der Fensterunterkante drehbar gelagerte Wickelwelle und eine Rollobahn mit einem dem Seitenfenster entsprechenden Zuschnitt aufweist, die mit einer Kante an der Wickelwelle befestigt ist und eine von der Wickelwelle abliegende Kante aufweist. An der abliegenden Kante ist ein Zugstab befestigt, der mit dem oberen Ende eines Tragstabs verbunden ist, an dessen unterem Ende ein biegsames linienförmiges Zugmittel verankert ist. Eine Führungseinrichtung für den Tragstab ist unterhalb der Fensterunterkante angeordnet, um den Tragstab zumindest angenähert rechtwinklig zu der Fensterunterkante vertikal zu führen.

Ausgehend hiervon ist es Aufgabe der Erfindung, einen vereinfachten Antrieb für Seitenfensterrollos mit Tragstäben zu schaffen, der in dem gesamten Bewegungsbereich des Seitenfensterrollos ein zuverlässiges Ein- und Ausfahren der Rollobahn ermöglicht.

Diese Aufgabe wird erfindungsgemäß durch ein Seitenfensterrollo mit den Merkmalen des Anspruches 1 oder ein Seitenfensterrollo mit den Merkmalen des Anspruches 9 gelöst.

Bei dem erfindungsgemäßen Seitenfesterrollo ist eine Führungseinrichtung vorgesehen, die unterhalb der Fensterunterkante im Türkorpus enthalten ist. Mit Hilfe dieser Führungseinrichtung ist wenigstens ein Tragstab geführt, der etwa rechtwinklig zu der Fensterunterkante auf und ab beweglich ist. An dem oberen Ende des Tragstabs sitzt in der bekannten Weise der Zugstab, an dem die Rollobahn befestigt ist. Mit Hilfe des Zugstabs wird die vom Tragstab erzeugte Kraft über die Breite der Rollobahn verteilt, damit sie über die gesamte Breite hinreichend gestrafft ist.

Zum Antrieb der Wickelwelle ist ein Getriebemotor vorgesehen. Die Tuchspannung in der Rollobahn wird aufrecht erhalten, indem mit dem unteren Ende des Tragstabs ein Zugmittel verbunden ist, dessen anderes Ende mit einem Federmotor zusammenwirkt.

Die Führungseinrichtung für den Tragstab kann von einer Führungsschiene gebildet sein, die eine Führungsnut mit konstantem Querschnitt enthält. Dadurch ist es möglich, innerhalb des Türkorpus dem Tragstab einen Verlauf aufzuprägen, der sich aus den Platzverhältnissen innerhalb des Türkorpus ergibt.

Zum Antrieb des Tragstabs über das Zugmittel kann dieser einen Fortsatz tragen, der durch die Führungsnut seitlich lich vorsteht.

Das linienförmige Zugmittel kann von einem Seil oder einem Band gebildet sein. Das Band hat dabei den Vorteil, sich besser kontrolliert aufwickeln zu lassen.

Der Federmotor ist erfindungsgemäß ein rotatorisch wirkender Federmotor. Der rotatorische Federmotor beansprucht in jedem Falle etwas weniger Raum als z.B. ein translatorischer Federmotor. Als aktives Element wird eine Spiralfeder in Gestalt einer Blattfeder verwendet.

Der Federmotor weist ein drehbar gelagertes Federmotorgehäuse auf, an dessen zylindrischer Außenumfangsfläche das Zugmittel befestigt ist und in dem die Spiralfeder untergebracht ist. Das Federmotorgehäuse wirkt somit gleichzeitig als Seil- oder Bandscheibe, auf die das Zugmittel aufgewickelt wird.

Die Spiralfeder kann mit ihrem innen liegenden Ende ortsfest gehaltert sein.

Der Federmotor liegt zweckmäßigerweise in der Nähe der Fensterunterkante, was Einbauraum spart.

Gemäß der anderen Lösung ist unterhalb der Fensterunterkante eine Wickelwelle drehbar gelagert. An der Wickelwelle ist mit einer Kante die Rollobahn befestigt. Die von der Wickelwelle abliegende Kante ist mit einem Zugstab versehen, der mit einem Tragstab verbunden ist. Der Zugstab ist an dem oberen Ende des Tragstabs angeordnet.

Zur Führung des Tragstabs sitzt unterhalb der Fensterunterkante, d.h. in Türkorpus, eine Führungseinrichtung. Mit Hilfe der Führungseinrichtung ist der Tragstab zumindest angenähert rechtwinklig zu der Fensterunterkante vertikal geführt.

An dem unteren Ende des Tragstabs ist ein biegsames linienförmiges Zugmittel befestigt. Das Zugmittel führt zu einer Aufwickeleinrichtung, die mit der Wickelwelle gekuppelt ist. Die Wickelwelle wird über einen Getriebemotor angetrieben.

Mit Hilfe einer derartigen Anordnung ist es möglich, die Spannung im Tuch verhältnismäßig konstant zu halten, d.h. unabhängig vom Einfahrzustand zu bekommen.

Die Führungseinrichtung kann von einer Führungsschiene gebildet sein, die eine Führungsnut enthält, die sich mit konstantem Querschnitt über die Führungsschiene erstreckt. Hierdurch ist es möglich, dem Tragstab innerhalb des Türkorpus einen gewünschten Verlauf aufzuprägen.

Zur Verbindung des Tragstabs mit dem Zugmittel kann der Tragstab einen Fortsatz tragen, der durch die Führungsnut nach außen vorsteht.

Das linienförmige Zugmittel ist vorzugsweise von einem Seil gebildet, weil es in mehreren Richtungen abgelenkt werden muss.

Die Aufwickeleinrichtung kann eine Seilschnecke aufweisen, um den sich änderenden Wickeldurchmesser der Wickelwelle zu berücksichtigen. Außerdem kann die Aufwickeleinrichtung über einen elastischen Drehausgleich mit der Wickelwelle gekuppelt sein.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Detail kann es sein, dass bestimmte Bereiche übertrieben groß dargestellt sind. Darüber hinaus sind die Zeichnungen plakativ vereinfacht und enthalten nicht jedes bei der praktischen Ausführung gegebenenfalls vorhandene Detail. Die Begriffe oben und unten bzw. vorne und hinten beziehen sich auf die normale Einbaulage bzw. die Terminologie bei Kraftfahrzeugen.

In der Zeichnung sind Ausführungsbeispiele des Gegenstandes der Erfindung dargestellt:
- Fig. 1: zeigt den aufgebrochenen Fondbereich eines Pkw;
- Fig. 2: zeigt in einer stark schematisierten Darstellung die hintere rechte Seitentür mit aufgebrochener Innenverkleidung;
- Fig. 3: zeigt in einer perspektivischen Ausschnittsdarstellung den Federmotor des Seitenfensterrollos nach Fig. 2;
- Fig. 4: zeigt die aufgebrochene rechte Seitentür unter Veranschaulichung des anderen Ausführungsbeispiels des Seitenfensterrollos in einer stark schematisierten Darstellung.

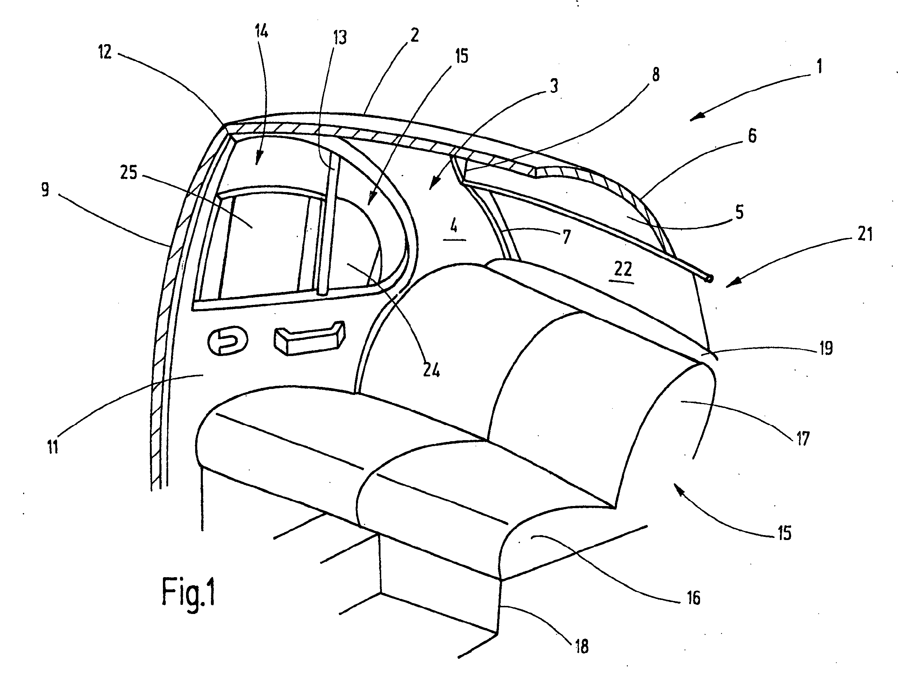

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, wie Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 22 und in dem dreieckigen Abschnitt 15 eine Rollbahn 24.

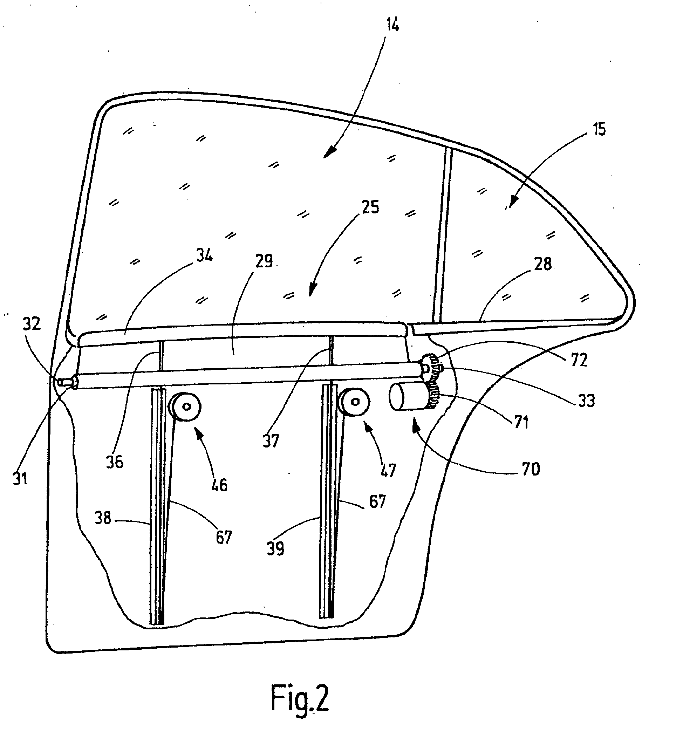

Die Seitentür aus Fig. 1 ist in Fig. 2 vergrößert veranschaulicht. Die Innenverkleidung ist aufgebrochen, um den Aufbau des Seitenfensterrollos 25 erkennen zu können.

Wie ersichtlich, wird die Unterseite des Fensterausschnittes durch eine Fensterunterkante 28 begrenzt, die einen nicht erkennbaren Schlitz enthält, durch den das Fensterrollo 25 aus dem Korpus der Seitentür 11 ausfahrbar ist. Zu dem Fensterrollo 25 gehört eine Rollobahn 29, die mit einer Kante an einer Wickelwelle 31 befestigt ist. Die Wickelwelle 31 ist unterhalb der Fensterunterkante 28 in dem Korpus der Tür mit Hilfe von Lagerzapfen 32 und 33 drehbar gelagert. Die Lagerböcke zum Lagern sind aus Übersichtlichkeitsgründen nicht gezeigt.

Die Rollobahn 29 besteht aus einem im Wesentlichen undehnbaren Material, das geeignet ist, hinreichende Abschattungswirkung zu erzeugen. Der Zuschnitt der Rollobahn 29 entspricht ungefähr der Größe des Fensterausschnittes 14. An der freien Kante ist die Rollobahn 29 mit einem Zugstab 34 versehen.

Als Führungseinrichtung für den Zugstab 34 zwischen der eingefahrenen Stellung, wie sie in Fig. 2 gezeigt, und der ausgefahrenen Stellung sind zwei Tragstäbe 36 und 37 vorgesehen. Die Tragstäbe 36 und 37 sind zylindrische Federstangen, die in der Lage sind, hinreichend ausknicksicher den Zugstab 34 zu tragen und zu bewegen. Das obere Ende der beiden Tragstäbe 36 und 37 ist zug- und druckfest mit dem Zugstab 24 verbunden.

Die beiden Tragstäbe 36 und 37 laufen in Führungsschienen 38 und 39, die in dem Türkorpus gehaltert sind und über die Fensterunterkante 28 nach oben nicht überstehen. Mit Hilfe der beiden Führungsschienen 38, 39 werden die Tragstäbe 36 und 37 etwa rechtwinklig zu der Fensterunterkante 28 gleitend geführt. Die Länge der Tragstäbe 36 und 37 ergibt sich aus der nachstehenden Funktionsbeschreibung. Innerhalb des Türkorpus müssen die Führungsschienen 38, 39 nicht notwendigerweise über die gesamte Länge gerade verlaufen; sie können beispielsweise um eine zu der Fahrzeugachse parallele Achse gekrümmt sein um dem Verlauf der Tür zu folgen.

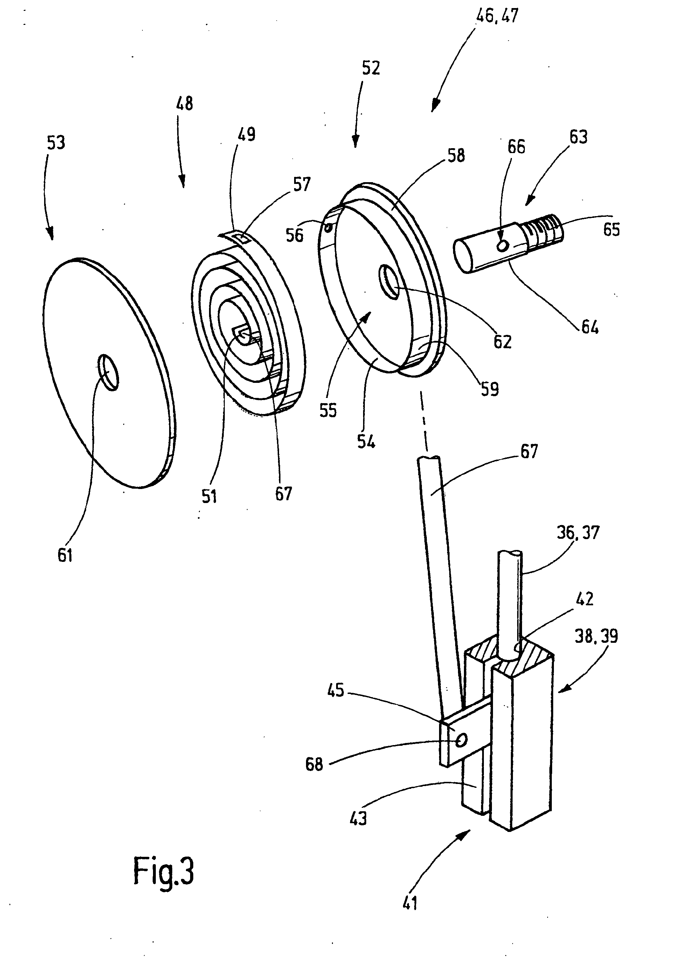

Wie unter Hinzunahme von Fig. 3 zu sehen ist, enthält jede der beiden Führungsschienen 38, 39, die im Übrigen untereinander gleich sind, eine Führungsnut 41, die hinterschnitten ausgeführt ist. Das Nutenprofil setzt sich aus einer zylindrischen Nutenkammer 42 und einem rechteckigen Nutenschlitz 43 zusammen, dessen Weite kleiner ist als der Durchmesser der Nutenkammer 42. Hierdurch entsteht eine hinterschnittene Struktur.

Der Durchmesser der Nutenkammer 42 entspricht dem Außendurchmesser des darin geführten Tragstabs 36 bzw. 37.

Wie Fig. 3 ferner erkennen lässt, ist mit dem unteren Ende jedes der beiden Tragstäbe 36, 37 eine Lasche 45 verbunden, die durch den Schlitz 43 nach außen vorsteht.

Jeder der beiden Tragstäbe 36, 37 ist durch einen eigenen Federmotor 46, 47 in die ausgefahrene Stellung vorgespannt. Die beiden Federmotoren 46, 47 sitzen knapp unterhalb der Fensterunterkante 28. In der Darstellung nach Fig. 2 sind sie unterhalb der Wickelwelle 31 dargestellt. Ihr Hub ergibt sich aus der weiter unten gegebenen Funktionserläuterungen. Die beiden Federmotoren 46 und 47 sind untereinander gleich aufgebaut, so dass die Erläuterung eines der beiden genügt.

Den inneren Aufbau der beiden Federmotoren 46, 47 zeigt die Explosionsdarstellung in Fig. 3.

Wie Fig. 3 erkennen lässt, gehört zu jedem Federmotor eine als Bandfeder ausgeführte Spiralfeder 48 mit einem äußeren Federende 49 und einem inneren Federende 51. Ferner gehört zu jedem Federmotor 46, 47 ein Federmotorgehäuse 52 mit einem zugehörigen Deckel 53. Das Gehäuse 52 ist becherartig gestaltet und weist eine zylindrische Gehäusewand 54 auf, die einen zylindrischen Innenraum 55 in Umfangsrichtung umgrenzt. An der Gehäusewand 54 ist ein nach innen ragender Fortsatz 56 vorgesehen, an dem das äußere Federende 59 mit einer Öffnung 57 formschlüssig verhakt ist. Die Wand 54 ist einstückig mit einer Seitenwand 58 versehen, die über die Außenumfangsfläche 59 der Wand 54 radial übersteht.

Der Deckel 53 weist denselben Durchmesser auf, wie die Wand 58 und sie kann über nicht weiter gezeigte Verankerungsmittel mit der Wand 54 verrastet oder verklinkt werden. Mittig durch die Wand 58 bzw. die Wand 53 läuft eine Lagerbohrung 61, 62 für eine Achse 63. Die Achse 63 setzt sich aus einem zylindrischen Abschnitt 64 und einem Gewindestück 65 zusammen. Der zylindrische Abschnitt 64 trägt eine radial vorstehende Nase 66, die dazu eingerichtet ist, mit einer Öffnung 67 am inneren Federende 51 verhakt zu werden. Nicht weiter gezeigte Sicherungs- oder Sprengringe sorgen für die Sicherung des Gehäuses 52 auf dem axialen Abschnitt 64 in axialer Richtung. Mit Hilfe des Gewindeabschnittes 65 kann die Achse 63 in nicht weiter gezeigter Weise auf einer Konsole in dem Türkorpus festgeschraubt werden.

Wie unschwer zu erkennen ist, bildet das Gehäuse 52 zusammen mit der aufgesetzten Scheibe 53 nach außen hin eine Bordscheibe mit einer zylindrischen Außenumfangsfläche, die durch die Außenumfangsfläche 59 gebildet ist, und Borden. An dieser Fläche ist ein als Textilband ausgeführtes Zugband 67 mit einem Ende befestigt. Das andere Ende des Bands 67 ist mit der Lasche 45, beispielsweise über einen Niet 68, verbunden.

Schließlich gehört zu dem Seitenfensterrollo 25 noch eine Getriebemotoranordnung 70, die über ein Ausgangszahnrad 71 ein Zahnrad 72 antreibt, das drehfest koaxial zu der Wickelwelle 31 angeordnet ist.

Die Funktionsweise des Seitenfensterrollos 25 ist wie folgt:

Im eingefahrenen Zustand ist die Rollobahn 29 soweit auf der Wickelwelle 31 aufgewickelt, bis die Zugstange 34 mit ihrer Oberseite oder Oberkante mit der Fensterunterkante 28 etwa bündig ist. In dieser Position haben die beiden Tragstäbe 36 und 37 ihre maximale Eintauchtiefe 38 und 39. Das bedeutet, dass die Zugbänder 67 maximal von den Federmotoren 46 und 47 abgewickelt sind.

Die selbsthemmende Wirkung des Getriebemotors 70 hindert die Federmotoren 46 und 47 daran die Rollobahn 29 von der Wickelwelle 31 abzuziehen. Solange der Motor 70 abgeschaltet ist, bleibt das Seitenfensterrollo 25 in der gezeigten Position.

Wenn der Benutzer des Seitenfensterrollo 25 ausfahren will, setzt er den Getriebemotor 70 entsprechend in Gang. Hierdurch wird die Wickelwelle 31 im Sinne eines Abwickelns der Rollobahn 29 in Umdrehungen versetzt. In dem Maße, in dem Rollobahn 29 von der Wickelwelle 31 abgewickelt wird, schieben die beiden Federmotoren 46 und 47 über die Tragstäbe 36 und 37 den Zugstab 34 nach oben. Diese Wirkung kommt zustande, weil die Federmotoren 46 und 47 über die Zugbänder 67 bestrebt sind, die unteren Enden der Tragstäbe 36 und 37 in Richtung auf die Fensterunterkante 28 nach oben anzuheben bzw. zu verschieben.

Wenn die Rollobahn 29 vollständig ausgefahren ist, d.h. die Zugstange 34 an der Fensteroberkante angekommen ist, wird durch eine entsprechende Steuerung, die hier nicht Gegenstand der Erfindung ist, der Getriebemotor 70 stillgesetzt. Dadurch werden die Federmotoren 46 und 47 gehindert, die Tragstäbe 36 und 37 weiter auszuschieben, weil die undehnbare Rollobahn 29 in Folge der gebremsten Wickelwelle 31 eine weitere Rollobahnbewegung 29 stoppt.

In der oberen Stellung sind die beiden Zugbänder 67 auf das jeweilige Federmotorgehäuse 52 des betreffenden Federmotors 46 bzw. 47 maximal aufgewickelt. In der obersten Stellung muss, damit die Spannung in den Zugbändern 67 erhalten bleibt, das untere Ende des jeweiligen Tragstabs 36, 37 ein entsprechendes Stück unterhalb des jeweiligen Federmotors 46, 47 stehen bleiben.

Zum Einfahren des Seitenfensterrollos 25 wird der Getriebemotor 70 mit umgekehrter Drehrichtung in Gang gesetzt. Hierdurch wird die Wickelwelle 31 im Sinne eines Aufwickelns der Rollobahn 29 in Umdrehungen versetzt. Da die Rollobahn 29 undehnbar ist, werden hierüber die entsprechenden Kräfte auf den Zugstab 34 übertragen und von dort auf die Tragstäbe 36 und 37, die gezwungen werden, entsprechend zunehmend tiefer in die Führungsschienen 38 und 39 einzutauchen. Bei der Abwärtsbewegung werden entsprechend die Zugbänder 67 von den Federmotoren 46 und 47 abgewickelt. Wie die Vorspannung innerhalb der Federmotoren 46 und 47 zustande kommt, braucht an dieser Stelle nicht erläutert zu werden, es ist für den Fachmann selbstverständlich.

Die Verwendung eines Zugbandes hat den Vorteil, dass ein geordnetes Aufwickeln der Lagen übereinander stattfindet. Die Verwendung von Seilen ist ebenfalls möglich, birgt jedoch eine gewisse Gefahr, dass die Lagen übereinander zu liegen kommen und sich dabei im Laufe der Zeit beschädigen.

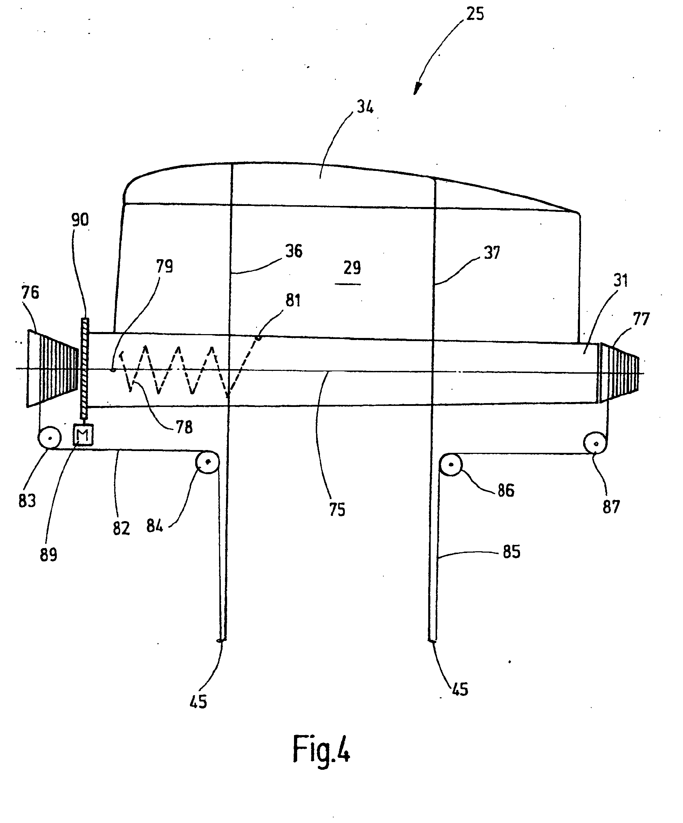

Fig. 4 zeigt eine andere Ausführungsform eines Seitenfensterrollos, bei dem die Tragstäbe über eine Art Gegenzugeinrichtung angetrieben werden.

Soweit bei der zweiten Ausführungsform bereits beschriebene Teile zur Anwendung kommen, werden sie mit demselben Bezugszeichen versehen und nicht erneut erläutert.

Das Seitenfensterrollo 25 nach Fig. 4 verwendet ebenfalls zwei hinreichend knicksteife Tragstäbe 36 und 37, die in der gleichen Weise angeordnet und geführt sind, wie dies in Verbindung mit Fig. 2 ausführlich erläutert ist. Die Führungsschienen sind bei der Darstellung nach Fig. 4 ebenso weggelassen, wie der Türkorpus, da beides für das weitere Verständnis zufolge der vorausgehenden Figurenbeschreibung nicht mehr erforderlich ist.

Die Rollobahn 29 wird auf eine rohrförmige Wickelwelle 31 aufgewickelt. Durch die rohrförmige Wickelwelle 36 führt eine schematisch angedeutete Achse 75, die an beiden Enden drehfest mit je einer Seilschnecke 76 bzw. 77 versehen ist. Außerdem ist die Achse 75 über eine als Torsionsfeder wirkende Schraubenfeder 78 mit der Wickelwelle 31 gekuppelt.

Die Schraubenfeder 78 ist bei 79 mit der Achse 75 und bei 81 mit der Wickelwelle 31 drehfest verbunden. Von der Seilschnecke 76 führt ein Zugseil 82 über zwischengeschaltete Umlenkrollen 83 und 84 zu dem unteren Ende des Tragstabs 36, wie dies im Zusammenhang mit Fig. 2 erläutert ist.

Ein weiteres Zugseil 85 führt von dem unteren Ende des Tragstabs 37, d.h. von der dort vorhandenen Lasche 45 über Umlenkrollen 86 und 87 zu der Seilschnecke 77. Es entsteht so eine kinematische Kette. Insgesamt entstehen zwei geschlossene kinematische Ketten. Die eine beginnt z.B. an dem oberen Ende des Tragstab 36 und führt von dort über den Zugstab 34, die Rollobahn 29, die Wickelwelle 31 zu der Schraubenfeder 78, von dort über die Achse 75, die Seilschnecke 76 und das Seil 82 wiederum zu dem Tragstab 36, jedoch zum anderen Ende.

Die andere parallel geschaltete kinematische Kette enthält den Tragstab 37, den Zugstab 34, die Rollobahn 29, die Wickelwelle 31, die, wie zuvor an die Schraubenfeder 78 angebunden ist. Von hier führt die kinematische Kette weiter über die Achse 75 zu der Seilschnecke 77 und von dort über das Seil 85 zu dem unteren Ende des Tragstabs 37.

Wie zu erkennen ist, liegt in beiden kinematischen Ketten jeweils die Schraubenfeder 78, die so die Spannung in der Rollobahn 29 aufrecht erhält.

Das bis dahin beschriebene Fensterrollo 25 kann manuell betätigt werden. Hierzu ergreift der Benutzer den Zugstab 34 und führt ihn von der Fensterunterkante 28 in Richtung auf die Fensteroberkante. Dabei wird die Rollobahn 29 von der Wickelwelle 31 abgewickelt. Die Drehbewegung der Wickelwelle 31 wird über die als Ausgleichselement dienende Schraubenfeder 78 auf die Achse 75, und damit auf die beiden Seilschnecken 76 und 77 übertragen. Die Verankerung ist so gewählt, dass beim Abwickeln der Rollobahn 29 von der Wickelwelle 31 gleichzeitig die beiden Zugseile 82 und 85 auf die entsprechende Seilschnecke 76 bzw. 77 aufgewickelt wird. Das Aufwickeln des jeweiligen Seils geschieht in dem selben Maße wie das Abwickeln von der Rollobahn, so dass die Spannung in den beiden kinematischen Ketten nahezu konstant bleibt.

Zum Einfahren des manuell betätigten Seitenfensterrollos 25 drückt der Benutzer den Zugstab 34 nach unten. Hierdurch würde an sich ohne die erläuterten kinematischen Ketten die Rollobahn 29 schlaff werden. Dies wird jedoch beim Einfahren verhindert, weil die Abwärtsbewegung des Zugstabs 35 über die beiden Tragstäbe 36 und 37 in die Zugseile 82 und 85 eingeleitet wird. Die Abwärtsbewegung der Zugseile 82 und 85 setzt mit dem entsprechenden Drehsinn die Seilschnecken 76 und 77 in Gang, so dass das betreffende Ende 79 der Schraubenfeder 78 mitgenommen wird, die daraufhin die Drehbewegung auf die Wickelwelle 31 überträgt. Da mit Hilfe der Seilschnecken 76 und 77 dafür gesorgt wird, dass die Drehzahl der Achse 75 nahezu dieselbe bleibt wie die Drehzahl der Wickelwelle 31, und zwar unabhängig vom Ballendurchmesser, bleibt die Vorspannung der Schraubenfeder 78 zwischen den beiden Punkten 79 und 81 ebenfalls konstant, was bedeutet, dass das Drehmoment, das in die Wickelwelle 31 eingeleitet wird, ebenfalls konstant bleibt.

Beim Herunterdrücken des Zugstabs 34 setzt somit der Benutzer über die Zugseile 82 und 85 letztlich auch die Wickelwelle 31 in Gang, damit die Rollobahn 29 aufgewickelt wird.

Es ist unschwer für den Fachmann zu erkennen, dass durch Verwendung eines Motors 89, der beispielsweise über ein Schneckenrad 90 mit der Wickelwelle 31 gekoppelt ist, die beschriebene Seitenfensterrolloanordnung auch elektrifiziert werden kann.

Ein Seitenfensterrollo weist einen an der beweglichen Kante der Rollobahn befestigten Zugstab auf. Der Zugstab wird durch zwei Tragstäbe getragen, die innerhalb des Türkorpus vertikal beweglich geführt sind. Am unteren Ende jedes Tragstabs greift ein Seil an, das je nach Ausführung entweder zu einem Federmotor läuft oder zu einer Seilscheibe, die über einen Drehausgleich mit der Wickelwelle verbunden ist.

## Patentansprüche

1. Seitenfensterrollo für Kraftfahrzeuge (1) mit einem Seitenfenster (14), das eine Fensterunterkante (28) und eine Fensteroberkante aufweist,
mit einer unterhalb der Fensterunterkante (28) drehbar gelagerten Wickelwelle (31),
mit einer Rollobahn (29), die einen dem Seitenfenster (14) entsprechenden Zuschnitt aufweist, die mit einer Kante an der Wickelwelle (31) befestigt ist und die eine von der Wickelwelle (31) abliegende Kante aufweist,
mit einem Zugstab (34), der an der von der Wickelwelle (31) abliegenden Kante befestigt ist,
mit wenigstens einem Tragstab (36,37), dessen oberes Ende mit dem Zugstab (34) verbunden ist und der ein unteres Ende aufweist,
mit einer Führungseinrichtung (38,39) für den Tragstab (36,37), die unterhalb der Fensterunterkante (28) angeordnet ist um den Tragstab (36,37) zumindest angenähert rechtwinkelig zu der Fensterunterkante (28) vertikal zu führen,
mit einem an dem unteren Ende des Tragstabs (36,37) verankerten biegsamen linienförmigen Zugmittel (67),
**dadurch gekennzeichnet, dass** das Seitenfensterrollo versehen ist
mit einem rotatorisch wirkenden Federmotor (46,47), der in der Nähe der Fensterunterkante (28) angeordnet ist und an dem das Zugmittel (67) mit seinem anderen Ende befestigt ist, wobei der Federmotor (46,47) als aktives Element eine Spiralfeder (48) in Gestalt einer Blattfeder aufweist und ein drehbar gelagertes Federmotorgehäuse (52,53) aufweist, an dessen zylindrischer Außenumfangsfläche (59) das Zugmittel (67) befestigt ist und in dem die Spiralfeder (48) untergebracht ist, und
mit einem Getriebemotor (70), der mit der Wickelwelle (31) gekuppelt ist.

2. Seitenfensterrollo nach Anspruch 1, **dadurch gekennzeichnet, dass** die Führungseinrichtung (38,39) für den Tragstab (36,37) von einer Führungsschiene gebildet ist, die eine Führungsnut (41) enthält, die sich mit konstantem Querschnitt über die Führungsschiene (38,39) fortsetzt.

3. Seitenfensterrollo nach Anspruch 2, **dadurch gekennzeichnet, dass** der Tragstab (36,67) mit einem Fortsatz (45) versehen ist, der durch die Führungsnut (41) nach außen vorsteht.

4. Seitenfensterrollo nach Anspruch 3, **dadurch gekennzeichnet, dass** an dem Fortsatz (45) das linienförmige Zugmittel (67) befestigt ist.

5. Seitenfensterrollo nach Anspruch 1, **dadurch gekennzeichnet, dass** das linienförmige Zugmittel (67) von einem Band gebildet ist.

6. Seitenfensterrollo nach Anspruch 1, **dadurch gekennzeichnet, dass** das linienförmige Zugmittel (67) von einem Seil gebildet ist.

7. Seitenfensterrollo nach Anspruch 5, **dadurch gekennzeichnet, dass** das Band (67) ein Textilband ist.

8. Seitenfensterrollo nach Anspruch 1, **dadurch gekennzeichnet, dass** die Spiralfeder (48) mit ihrem innen liegenden Federende (51) ortsfest gehalten ist.

9. Seitenfensterrollo für Kraftfahrzeuge (1) mit einem Seitenfenster (14), das eine Fensterunterkante (28) und eine Fensteroberkante aufweist,
mit einer unterhalb der Fensterunterkante (28) drehbar gelagerten Wickelwelle (31),
mit einer Rollobahn (29), die einen dem Seitenfenster (14) entsprechenden Zuschnitt aufweist, die mit einer Kante an der Wickelwelle (31) befestigt ist und die eine von der Wickelwelle (31) abliegende Kante aufweist,
mit einem Zugstab (34), der an der von der Wickelwelle (31) abliegenden Kante befestigt ist,
mit wenigstens einem Tragstab (36,37), dessen oberes Ende mit dem Zugstab (34) verbunden ist und der ein unteres Ende aufweist,
mit einer Führungseinrichtung (38,39) für den Tragstab (36,37), die unterhalb der Fensterunterkante (28) angeordnet ist um den Tragstab (36,37) zumindest angenähert rechtwinkelig zu der Fensterunterkante (28) vertikal zu führen,
mit einem an dem unteren Ende des Tragstabs (36,37) verankerten biegsamen linienförmigen Zugmittel (82,85),
**dadurch gekennzeichnet, dass** das Seitenfensterrollo versehen ist
mit einer Aufwickeleinrichtung (76,77), an der das Zugmittel (82,85) mit seinem anderen Ende befestigt ist und die mit der Wickelwelle (31) gekuppelt ist.

10. Seitenfensterrollo nach Anspruch 9, **dadurch gekennzeichnet, dass** die Führungseinrichtung (38,39) für den Tragstab (36,37) von einer Führungsschiene gebildet ist, die eine Führungsnut (41) enthält, die sich mit konstantem Querschnitt über die Führungsschiene fortsetzt.

11. Seitenfensterrollo nach Anspruch 10, **dadurch gekennzeichnet, dass** der Tragstab (36,37) mit einem Fortsatz (45) versehen ist, der durch die Führungsnut (41) nach außen vorsteht.

12. Seitenfensterrollo nach Anspruch 11, **dadurch gekennzeichnet, dass** an dem Fortsatz (45) das Zugmittel (82,85) befestigt ist.

13. Seitenfensterrollo nach Anspruch 9, **dadurch gekennzeichnet, dass** das linienförmige Zugmittel von einem Seil gebildet ist.

14. Seitenfensterrollo nach Anspruch 9, **dadurch gekennzeichnet, dass** die Aufwickeleinrichtung (76,77) von einer Seilschnecke gebildet ist.

15. Seitenfensterrollo nach Anspruch 9, **dadurch gekennzeichnet, dass** die Aufwickeleinrichtung (76,77) über einen elastischen Drehausgleich (78) mit der Wickelwelle (31) gekuppelt ist.

16. Seitenfensterrollo nach Anspruch 9, **dadurch gekennzeichnet, dass** ein Getriebemotor (89) vorhanden ist, der mit der Wickelwelle (31) oder der Aufwickeleinrichtung (76,77) gekuppelt ist.

## Claims

1. Side window roller blind for motor vehicles (1) with a side window (14),
which has a window lower edge (28) and a window upper edge,
with a winding shaft (31) rotatably mounted below the window lower edge (28),
with a blind sheet (29), which has a blank corresponding to the side window (14), is fastened to the winding shaft (31) at one edge and has an edge remote from the winding shaft (31),
with a pull rod (34), which is fastened to the edge remote from the winding shaft (31),
with at least one carrier rod (36, 37), the upper end of which is connected to the pull rod (34) and which has a lower end,
with a guide arrangement (38, 39) for the carrier rod (36, 37), which is arranged below the window lower edge (28) to vertically guide the carrier rod (36, 37) at least approximately at right angles to the window lower edge (28), with a flexible linear pulling element (67) anchored to the lower end of the carrier rod (36, 37),
**characterised in that** the side window roller blind is provided with a rotationally active spring motor (46, 47), which is arranged in the vicinity of the window lower edge (28) and to which the pulling element (67) is fastened at its other end, wherein the spring motor (46, 47) has a spiral spring (48) in the form of a leaf spring as active element has a rotatably mounted spring motor housing (52, 53), to the cylindrical outer peripheral face (59) of which the pulling element (67) is fastened and in which the spiral spring (48) is housed, and
with a geared motor (70), which is coupled to the winding shaft (31).

2. Side window roller blind according to claim 1, **characterised in that** the guide arrangement (38, 39) for the carrier rod (36, 37) is formed by a guide rail, which contains a guide groove (41), which extends with a constant cross-section over the guide rail (38, 39).

3. Side window roller blind according to claim 2, **characterised in that** the carrier rod (36, 37) is provided with an extension (45), which projects outwards through the guide groove (41).

4. Side window roller blind according to claim 3, **characterised in that** the linear pulling element (67) is fastened to the extension (45).

5. Side window roller blind according to claim 1, **characterised in that** the linear pulling element (67) is formed by a band.

6. Side window roller blind according to claim 1, **characterised in that** the linear pulling element (67) is formed by a rope.

7. Side window roller blind according to claim 5, **characterised in that** the band (67) is a textile band.

8. Side window roller blind according to claim 1, **characterised in that** the spiral spring (48) is fixedly held at its spring end (51) located on the inside.

9. Side window roller blind for motor vehicles (1) with a side window (14),
which has a window lower edge (28) and a window upper edge,
with a winding shaft (31) rotatably mounted below the window lower edge (28),
with a blind sheet (29), which has a blank corresponding to the side window (14), is fastened to the winding shaft (31) at one edge and has an edge remote from the winding shaft (31),
with a pull rod (34), which is fastened to the edge remote from the winding shaft (31),
with at least one carrier rod (36, 37), the upper end of which is connected to the pull rod (34) and which has a lower end,
with a guide arrangement (38, 39) for the carrier rod (36, 37), which is arranged below the window lower edge (28) to vertically guide the carrier rod (36, 37) at least approximately at right angles to the window lower edge (28), with a flexible linear pulling element (82, 85) anchored to the lower end of the carrier rod (36, 37),
**characterised in that** the side window roller blind is provided with a winding device (76, 77), to which the pulling element (82, 85) is fastened at its other end and which is coupled to the winding shaft (31).

10. Side window roller blind according to claim 9, **characterised in that** the guide arrangement (38, 39) for the carrier rod (36, 37) is formed by a guide rail, which contains a guide groove (41), which extends with a constant cross-section over the guide rail.

11. Side window roller blind according to claim 10, **characterised in that** the carrier rod (36, 37) is provided with an extension (45), which projects outwards through the guide groove (41).

12. Side window roller blind according to claim 11, **characterised in that** the pulling element (82, 85) is fastened to the extension (45).

13. Side window roller blind according to claim 9, **characterised in that** the linear pulling element is formed by a rope.

14. Side window roller blind according to claim 9, **characterised in that** the winding device (76, 77) is formed by a rope worm.

15. Side window roller blind according to claim 9, **characterised in that** the winding device (76, 77) is coupled to the winding shaft (31) via an elastic rotation compensating means (78).

16. Side window roller blind according to claim 9, **characterised in that** a geared motor (89) is provided, which is coupled to the winding shaft (31) or the winding device (76, 77).

## Revendications

1. Store à enrouleur pour fenêtre latérale, destiné à des véhicules automobiles (1) dotés d'une fenêtre latérale (14) qui présente un bord de fenêtre inférieur (28) et un bord de fenêtre supérieur,
comprenant un axe d'enroulement (31) monté avec possibilité de rotation sous le bord de fenêtre inférieur (28),
comprenant une bande de store (29) qui présente une coupe correspondant à la fenêtre latérale (14), qui est fixée par un bord à l'axe d'enroulement (31) et qui présente un bord éloigné de l'axe d'enroulement (31),
comprenant une barre de traction (34) qui est fixée au bord éloigné de l'axe d'enroulement (31),
comprenant au moins une barre de support (36, 37) dont l'extrémité supérieure est reliée à la barre de traction (34) et qui présente une extrémité inférieure,
comprenant un dispositif de guidage (38, 39) pour la barre de support (36, 37), qui est placé sous le bord de fenêtre inférieur (28), afin de guider la barre de support (36, 37) verticalement, au moins approximativement à angle droit par rapport au bord de fenêtre inférieur (28),
comprenant un moyen de traction (67) linéaire souple, ancré sur l'extrémité inférieure de la barre de support (36, 37),
**caractérisé en ce que** le store à enrouleur pour fenêtre latérale est doté
d'un moteur à ressort (46, 47) à action rotative qui est disposé à proximité du bord de fenêtre inférieur (28) et auquel le moyen de traction (67) est fixé avec son autre extrémité, le moteur à ressort (46, 47) présentant, en tant qu'élément actif, un ressort spiral (48), sous la forme d'une lame de ressort, et présentant un boîtier de moteur à ressort (52, 53) monté avec possibilité de rotation, à la surface périphérique extérieure (59) duquel est fixé le moyen de traction (67) et dans lequel est logé le ressort spiral (48), et
d'un motoréducteur (70) qui est accouplé à l'axe d'enroulement (31).

2. Store à enrouleur pour fenêtre latérale selon la revendication 1, **caractérisé en ce que** le dispositif de guidage (38, 39) pour la barre de support (36, 37) est constitué d'une glissière qui comporte une rainure de guidage (41), laquelle s'étend avec une section transversale constante sur la glissière (38, 39).

3. Store à enrouleur pour fenêtre latérale selon la revendication 2, **caractérisé en ce que** la barre de support (36, 37) est pourvue d'un bras (45) qui fait saillie vers l'extérieur en passant par la rainure de guidage (41).

4. Store à enrouleur pour fenêtre latérale selon la revendication 3, **caractérisé en ce que** le moyen de traction (67) linéaire est fixé au bras (45).

5. Store à enrouleur pour fenêtre latérale selon la revendication 1, **caractérisé en ce que** le moyen de traction (67) linéaire est constitué d'un ruban.

6. Store à enrouleur pour fenêtre latérale selon la revendication 1, **caractérisé en ce que** le moyen de traction (67) linéaire est constitué d'un cordon.

7. Store à enrouleur pour fenêtre latérale selon la revendication 5, **caractérisé en ce que** le ruban (67) est un ruban textile.

8. Store à enrouleur pour fenêtre latérale selon la revendication 1, **caractérisé en ce que** le ressort spiral (48) est maintenu fixe avec son extrémité de ressort (51) située à l'intérieur.

9. Store à enrouleur pour fenêtre latérale, destiné à des véhicules automobiles (1) dotés d'une fenêtre latérale (14) qui présente un bord de fenêtre inférieur (28) et un bord de fenêtre supérieur,
comprenant un axe d'enroulement (31) monté avec possibilité de rotation sous le bord de fenêtre inférieur (28),
comprenant une bande de store (29) qui présente une coupe correspondant à la fenêtre latérale (14), qui est fixée par un bord à l'axe d'enroulement (31) et qui présente un bord éloigné de l'axe d'enroulement (31),
comprenant une barre de traction (34) qui est fixée au bord éloigné de l'axe d'enroulement (31),
comprenant au moins une barre de support (36, 37) dont l'extrémité supérieure est reliée à la barre de traction (34) et qui présente une extrémité inférieure,
comprenant un dispositif de guidage (38, 39) pour la barre de support (36, 37), qui est placé sous le bord de fenêtre inférieur (28), afin de guider la barre de support (36, 37) verticalement, au moins approximativement à angle droit par rapport au bord de fenêtre inférieur (28),
comprenant un moyen de traction (82, 85) linéaire souple, ancré sur l'extrémité inférieure de la barre de support (36, 37),
**caractérisé en ce que** le store à enrouleur pour fenêtre latérale est doté
d'un dispositif enrouleur (76, 77) auquel le moyen de traction (82, 85) est fixé par son autre extrémité et qui est accouplé à l'axe d'enroulement (31).

10. Store à enrouleur pour fenêtre latérale selon la revendication 9, **caractérisé en ce que** le dispositif de guidage (38, 39) pour la barre de support (36, 37) est constitué d'une glissière qui comporte une rainure de guidage (41), laquelle s'étend avec une section transversale constante sur la glissière.

11. Store à enrouleur pour fenêtre latérale selon la revendication 10, **caractérisé en ce que** la barre de support (36, 37) est pourvue d'un bras (45) qui fait saillie vers l'extérieur en passant par la rainure de guidage (41).

12. Store à enrouleur pour fenêtre latérale selon la revendication 11, **caractérisé en ce que** le moyen de traction (82, 85) linéaire est fixé au bras (45).

13. Store à enrouleur pour fenêtre latérale selon la revendication 9, **caractérisé en ce que** le moyen de traction linéaire est constitué d'un cordon.

14. Store à enrouleur pour fenêtre latérale selon la revendication 9, **caractérisé en ce que** le dispositif enrouleur (76, 77) est constitué d'une vis pour cordon.

15. Store à enrouleur pour fenêtre latérale selon la revendication 9, **caractérisé en ce que** le dispositif enrouleur (76, 77) est accouplé à l'axe d'enroulement (31) par l'intermédiaire d'un élément compensateur de rotation (78).

16. Store à enrouleur pour fenêtre latérale selon la revendication 9, **caractérisé en ce qu'**il est prévu un motoréducteur (89) qui est accouplé à l'axe d'enroulement (31) ou au dispositif enrouleur (76, 77).
